Europäisches Patentamt

European Patent Office

Office européen des brevets

(19)

(11) **EP 0 451 018 B1**

(12) **FASCICULE DE BREVET EUROPEEN**

(45) Date de publication et mention
de la délivrance du brevet:
**28.05.1997 Bulletin 1997/22**

(51) Int Cl.[6]: **G02B 26/02**

(21) Numéro de dépôt: **91400812.3**

(22) Date de dépôt: **26.03.1991**

(54) **Commutateur et système de commutation optiques multivoies intégrés et procédé de fabrication du commutateur**

Schalter und integriertes optisches Mehrweg-Schaltsystem und Herstellungsverfahren für Schalter

Switch and integrated multi-path optical switching system and manufacturing method for switch

(84) Etats contractants désignés:
**BE DE GB IT NL SE**

(30) Priorité: **27.03.1990 FR 9003902**

(43) Date de publication de la demande:
**09.10.1991 Bulletin 1991/41**

(73) Titulaire: **COMMISSARIAT A L'ENERGIE ATOMIQUE
75015 Paris (FR)**

(72) Inventeurs:
• **Valette, Serge
F-38100 Grenoble (FR)**
• **Danel, Jean Sébastien
F-38100 Grenoble (FR)**

(74) Mandataire: **Poulin, Gérard et al
Société BREVATOME
25, rue de Ponthieu
75008 Paris (FR)**

(56) Documents cités:
**WO-A-88/07697**

• **ELECTRONICS LETTERS, vol. 22, no. 15, 17 juillet 1986, pages 816-818; P. GRANESTRAND et al.: "Strictly nonblocking 8 x 8 integrated optical switch matrix"**
• **JOURNAL OF LIGHTWAVE TECHNOLOGY, vol. LT-4, no. 10, octobre 1986, pages 1542-**
• **1545; G.A. BOGERT et al.: "Low crosstalk 4 x 4 TiLiNbO3 optical switch with permanently attached polarization maintaining fiber array"**
• **PATENT ABSTRACTS OF JAPAN, vol. 11, no. 370 (P-642)[2817], 3 décembre 1987; & JP-A-62 141 507 (MATSUSHITA ELECTRIC IND. CO., LTD) 25- 06-1987**

## Description

L'invention se rapporte à un commutateur optique multivoie réalisé en optique intégrée pour commuter des faisceaux lumineux, à un système de commutation comportant plusieurs commutateurs optiques ainsi qu'au procédé de fabrication de ces derniers.

Elle trouve une application en particulier dans le domaine des traitements de signaux radars en temps réel, par exemple dans les corrélateurs, analyseurs de spectre ou interféromètres, dans le domaine des télécommunications par voie optique et dans le domaine des capteurs à fibres optiques.

De façon générale, l'invention s'applique à tout système qui nécessite de relier M points lumineux à N points de sortie avec M et N entiers $\geq 1$. En particulier, le commutateur peut servir à amener la lumière fournie par des sources lumineuses telles que des diodes laser vers des barrettes de détecteurs optiques du type photodiode. De même, le commutateur peut assurer le transfert d'un signal lumineux transporté par une quelconque fibre optique d'un ensemble de fibres optiques, généralement monomodes, vers n'importe quelle fibre d'un autre ensemble de fibres optiques.

Les commutateurs actuellement connus en optique intégrée utilisent des aiguillages successifs, convenablement associés et constitués de microguides. Le transfert de la lumière d'un microguide à un autre est assuré par interaction du signal lumineux à commuter avec un champ électrique engendré par des électrodes placées en regard des microguides.

De tels aiguillages sont en particulier décrits dans l'article Electronics Letters de juillet 1986, vol. 22, n° 15, de P. Granestrand et al. "Strictly non blocking 8x8 integrated optical switch matrix", p. 816-818 et dans l'article de G.A. Bogert et al. "Low crosstalk 4x4 TiLiNbO$_3$ optical switch with permanently attached polarization maintaining fiber array", Journal of Lightwave Technology, vol. LT-4, n°10 d'octobre 1986, p. 1542-1545.

Ces dispositifs ont l'avantage d'utiliser des puissances électriques de commande relativement faibles. En revanche, ils ne peuvent être réalisés que sur des matériaux ayant des propriétés électro-optiques telles que LiNbO$_3$. En particulier, les matériaux amorphes du type verre ou silice ou encore le silicium ne peuvent être utilisés. Par ailleurs, du fait de l'agencement en cascade des différents microguides, toutes les combinaisons pour transmettre un signal lumineux d'un microguide à un autre ne sont pas équivalentes. Enfin, la commande de ces aiguillages est souvent complexe et cette complexité augmente avec le nombre d'entrées et de sorties.

On connaît, par le document WO 88/07697, un déflecteur de rayonnement comprenant une poutre flexible dont une extrémité est libre et dont l'autre extrémité est solidaire d'un substrat.

L'invention a justement pour objet un commutateur et un système de commutation optiques multivoies intégrés et un procédé de fabrication de ce commutateur permettant de remédier aux différents inconvénients ci-dessus. En particulier, toutes les combinaisons de transfert de signaux lumineux sont équivalentes et des matériaux amorphes peuvent être utilisés pour la constitution du commutateur et du système de commutation optique.

En outre, la réalisation technique du commutateur et du système de commutation est beaucoup plus simple que celle de l'art antérieur, entraînant une reproductibilité des dispositifs de l'invention supérieure à celle des dispositis connus.

WO 88/07697 décrit un commutateur optique correspondant au préambule de la revendication 1.

L'invention a pour objet un commutateur optique conforme à la revendication 1.

Les microguides d'entrée et de sortie et le microguide central sont obtenus par gravure notamment d'une même couche. En outre, le microguide d'entrée et le microguide central forment un seul et même microguide.

Le commutateur de l'invention est réversible, c'est-à-dire que les microguides d'entrée et de sortie peuvent jouer respectivement le rôle de microguides de sortie et d'entrée. Dans ce cas, l'extrémité fixe de la poutre se trouve en regard des microguides de sortie.

Les déformations de la poutre dans l'évidement pratiqué dans le substrat et la couche tampon peuvent être dues, soit à un effet capacitif (généralement faible), soit plus favorablement à un effet inductif (force de Laplace). Les forces engendrées par ces moyens d'excitation doivent être suffisamment fortes pour assurer un déplacement de la poutre, selon la seconde direction, de plusieurs micromètres et voire plusieurs dizaines ou centaines de micromètres pour une matrice de commutation.

L'utilisation de l'effet capacitif ou de l'effet inductif dépend de l'application spécifique envisagée (nombre de voies de commutation) ainsi que de la forme et du poids de la poutre flexible.

Le commutateur de l'invention peut constituer, de façon simple, une matrice de commutation reliant M points lumineux d'entrée à N points de sortie. A cet effet, le commutateur optique de l'invention comprend au moins deux microguides d'entrée adjacents, sensiblement parallèles à la première direction, au moins deux microguides optiques de sortie, un premier et un second évidements distincts, pratiqués dans le substrat et la couche tampon et disposés dans le prolongement l'un de l'autre entre les microguides d'entrée et de sortie, une première poutre et une seconde poutre solidaires par leur extrémité fixe et disposées dans le prolongement l'une de l'autre de façon que leurs microguides centraux soient en coïncidence et orientés selon la première direction, l'extrémité libre de la première poutre étant apte à se déformer dans le premier évidement et l'extrémité libre de la seconde poutre étant apte à se déformer dans le second évidement, des premiers moyens pour engendrer des déformations de la première poutre de façon à amener l'extrémité libre de son microguide central dans le prolongement de l'un des microguides d'entrée et des seconds moyens pour engendrer des déformations de la seconde poutre de façon à amener l'extrémité libre de son microguide central dans le prolongement de l'un des microguides de sortie.

De façon avantageuse, les microguides d'entrée et de sortie sont disposés en éventail. Ainsi, les microguides d'entrée permettent de rapprocher les faisceaux incidents à commuter, au niveau de la poutre, et les microguides de sortie permettent d'écarter les faisceaux commutés. Ceci permet d'augmenter le nombre de microguides d'entrée et de sortie, et donc le nombre de faisceaux à commuter et leurs directions de commutation, à puissance de commande égale des déformations de la poutre et de permettre aussi une éventuelle connexion avec des fibres optiques nécessitant un écartement minimum fixé par le diamètre des fibres.

De façon générale, le commutateur optique de l'invention s'applique à tout type de matériau. En particulier, il peut être réalisé sur un substrat en niobate de lithium avec des microguides obtenus par diffusion de titane ; sur un substrat de verre, les microguides étant alors obtenus par échange ionique de Ag, Cs ou Tl ; sur du silicium ou encore sur des composants III-V, les microguides étant alors obtenus par des techniques d'épitaxie.

De façon avantageuse, le commutateur optique comporte un substrat en silicium pourvu d'une couche tampon en silice non intentionnellement dopée ou dopée avec des dopants diminuant son indice de réfraction tels que le fluor ou le bore ou encore l'augmentant légèrement comme le phosphore, le germanium et le titane, des microguides en nitrure de silicium ou éventuellement en oxynitrure de silicium $SiO_xN_y$ avec $0<x<2$ et $0<y<4/3$ ou mieux en silice dopée avec des dopants augmentant son indice de réfraction tels que le titane, l'azote, le germanium ou le phosphore d'une valeur qui permettra de maintenir un indice des microguides plus grand que celui de la couche tampon. En outre, l'ensemble de la structure est recouvert d'une couche de silice non intentionnellement dopée ou dopée avec des dopants diminuant son indice. Cette couche de silice permet d'assurer un bon confinement de la lumière et l'isolement optique du substrat.

L'intérêt d'utiliser des structures du type $Si/SiO_2/SiO_2$ dopée+$/SiO_2$, dite structure A, ou $Si/SiO_2/Si_3N_4/SiO_2$, dite structure B, est lié à la grande maîtrise technologique de ces matériaux et en particulier à leur gravure bien maîtrisée, ce qui permet d'obtenir un commutateur optique parfaitement bien défini et ayant d'excellents qualités optiques.

La structure A est utilisée en général dans les applications monomodes et la structure 8 est utilisée dans des applications multimodes.

L'invention a aussi pour objet un système de commutation optique intégré multivoie réversible comportant plusieurs commutateurs optiques tels que définis précédemment, disposés en cascade.

L'invention a encore pour objet un procédé de fabrication d'un commutateur optique selon la revendication 19.

De préférence, la couche tampon est gravée de façon anisotrope pour avoir des poutres de forme rectangulaire et parce que la gravure sèche anisotrope de la silice est bien maîtrisée par l'homme de l'art. Toutefois, une attaque quasi isotrope peut être envisagée notamment dans le cas de moyens d'excitation des poutres à effet inductif.

D'autres caractéristiques et avantages de l'invention ressortiront mieux de la description qui va suivre, donnée à titre illustratif et non limitatif, en référence aux dessins annexés, dans lesquels :

- la figure 1 représente schématiquement en coupe longitudinale un commutateur optique conforme à l'invention,
- la figure 2 est une vue en perspective d'un commutateur conforme à l'invention, montrant un système de commande capacitif des déformations de la poutre,
- la figure 3 est une vue de dessus du commutateur de la figure 2,
- la figure 4 illustre schématiquement les différentes étapes de fabrication d'un commutateur conforme à l'invention, selon la direction IV-IV de la figure 3,
- la figure 5 représente schématiquement, en vue de dessus, un commutateur conforme à l'invention, dans lequel les moyens d'excitation de la poutre sont du type inductif,
- les figures 6A, 6B et 7 représentent schématiquement, en coupes transversale et longitudinale, les moyens permettant d'appliquer un champ magnétique perpendiculairement à la surface du substrat,
- les figures 8A et 8B sont deux variantes de réalisation de la poutre d'un commutateur conforme à l'invention, équipé de moyens d'excitation de la poutre du type inductif,
- la figure 9 est une autre variante de réalisation d'un commutateur conforme à l'invention, équipé de moyens d'excitation de la poutre du type inductif,
- la figure 10 représente schématiquement, en vue de dessus, une matrice de commutation conforme à l'invention,
- la figure 11 représente schématiquement en vue de dessus une variante de réalisation de la poutre du commutateur conforme à l'invention,
- la figure 12 représente schématiquement en vue de dessus une autre variante de réalisation de la poutre du commutateur conforme à l'invention,
- la figure 13 représente schématiquement en vue de dessus une autre variante de réalisation d'un commutateur conforme à l'invention, équipé d'une poutre de rappel, et
- la figure 14 représente schématiquement, en vue de dessus, un système de commutation conforme à l'invention comportant deux commutateurs optiques en cascade.

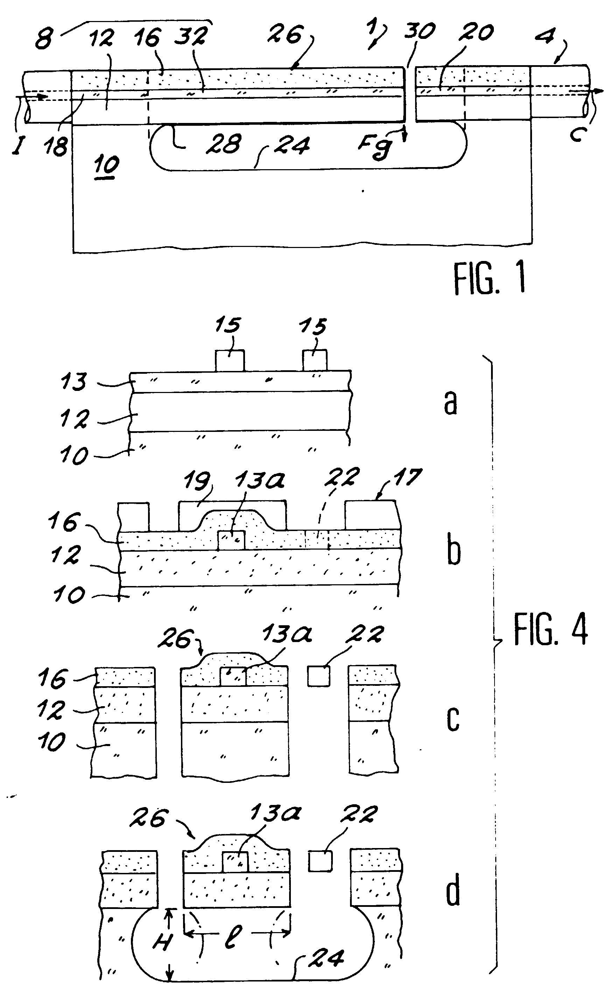

Sur les figures 1 à 3, on a représenté un commutateur optique 1 conforme à l'invention servant à commuter un faisceau incident 1 selon deux directions.

Le faisceau lumineux à commuter est transporté par une fibre monomode 2, par exemple en silice, et le faisceau commuté C sort du commutateur par une première fibre monomode 4 ou une seconde fibre monomode 6 aussi en silice.

Selon l'invention, le commutateur comprend une structure guide 8 réalisée sur un substrat 10 en silicium monocristallin et présentant une face d'entrée E et une face de sortie S rigoureusement parallèles, obtenues par clivage.

La structure guide 8 comporte une couche tampon 12 en oxyde de silicium non intentionnellement dopé, de 8 à 12 micromètres d'épaisseur, des microguides en oxyde de silicium dopé par du titane, et une couche supérieure 16 en silice non intentionnellement dopée de 2 à 10 micromètres d'épaisseur, cette couche pouvant pour certaines applications être remplacée par de l'air.

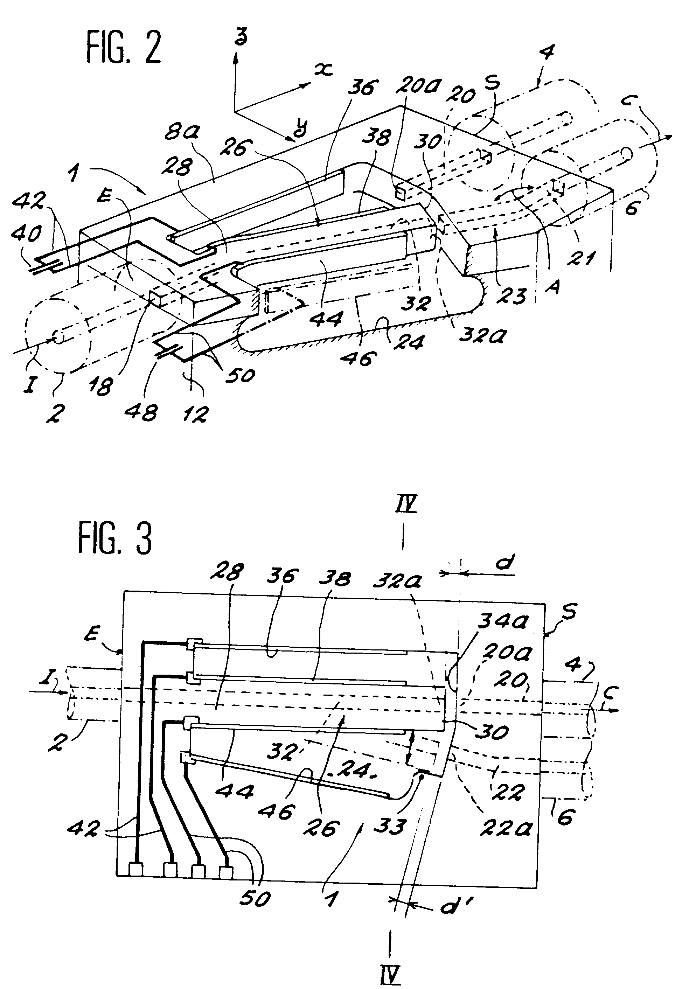

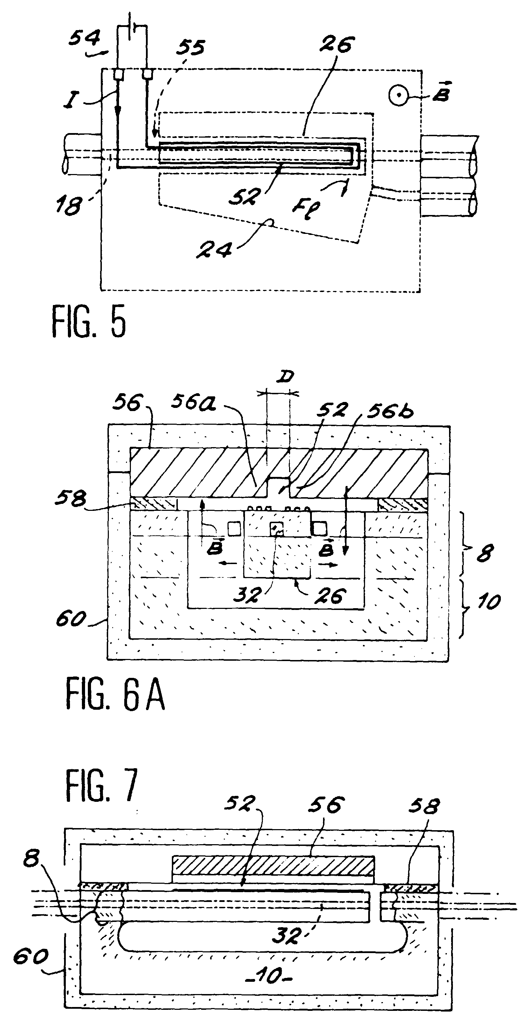

Le commutateur représenté sur les figures 2 et 3 comporte un microguide d'entrée 18 et deux microguides de sortie 20 et 22, de 2 à 6 micromètres de hauteur et de 2 à 8 micromètres de large. Les microguides 18 et 20 sont parallèles à une direction x parallèle à la plus grande surface 8a de la structure guide. Les microguides 18 et 20 sont disposés dans le prolongement l'un de l'autre et de part et d'autre d'un évidement 24 traversant la structure guide 8 et s'étendant jusque dans le substrat.

Le microguide de sortie 22, situé du même côté de l'évidement 24 que le microguide 20 et adjacent à ce dernier, comporte, du côté de la sortie S du commutateur, une partie 21, strictement parallèle au microguide 20 et, du côté de l'évidement 24, une partie 23 formant un angle rentrant A avec la partie 21, d'une valeur comprise entre 0,06° et 6° environ, cette valeur étant liée à la longueur de la poutre.

Ainsi, les extrémités d'entrée 20a et 22a respectivement des microguides de sortie, débouchant dans l'évidement 24, sont plus proches l'une de l'autre que leur extrémité de sortie, affleurant sur la face de sortie S de la structure guide 8.

Les extrémités d'entrée 20a et 22a des microguides de sortie sont typiquement distantes de 10 à 20 micromètres alors que les extrémités de sortie de ces microguides sont distantes de 125 micromètres environ de façon à pouvoir être connectées respectivement aux fibres de sortie 4 et 6 qui ont généralement un diamètre extérieur relativement grand, de l'ordre de 125 micromètres.

L'évidement 24 définit une poutre flexible 26 orientée au repos parallèlement à la direction x. Cette poutre 26 peut se déformer dans l'évidement 24 selon une direction y, parallèle à la surface 8a de la structure guide et perpendiculaire à la direction x. Cette poutre 26 comprend une extrémité fixe 28, solidaire de la structure guide 8 et du substrat 2 et une extrémité libre 30 apte à se déformer dans l'évidement 24.

La poutre 26 est définie dans la structure guide 8 et est pourvue d'un microguide central 32 s'étendant sur toute sa longueur et orienté, au repos, parallèlement à la direction x. Ce microguide central 32 est disposé dans le prolongement du microguide d'entrée 18 de sorte que leurs axes longitudinaux parallèles à la direction x soient confondus.

En réalité, le microguide d'entrée 18 et le microguide central 32 de la poutre constituent un seul et même microguide (figure 1).

La commutation du faisceau incident véhiculé par le microguide d'entrée 18 vers le microguide de sortie 20 est assurée en amenant l'extrémité libre 32a du microguide central de la poutre en face et en coïncidence avec l'extrémité d'entrée 20a du microguide de sortie 20. C'est cette configuration qui est représentée sur la figure 1.

De même, la commutation du faisceau incident véhiculé par le microguide d'entrée 18 vers le microguide de sortie 22 est assurée en amenant l'extrémité libre 32a du microguide central en face et en coïncidence avec l'extrémité d'entrée 22a du microguide de sortie 22. C'est cette deuxième configuration qui est représentée sur les figures 2 et 3.

Conformément à l'invention, la paroi interne de l'évidement 24, en regard de l'extrémité libre 30 de la poutre (figure 3), est constituée de deux parties 34a et 34b formant un angle rentrant, de valeur proche ou identique à l'angle A de sorte que la distance $\underline{d}$ séparant l'extrémité 32a du microguide central 32 et l'extrémité d'entrée 20a du microguide 20, lorsque la poutre 26 est en regard du microguide 20, est égale à la distance $\underline{d}'$ séparant l'extrémité 32a de ce microguide central et l'extrémité 22a du microguide de sortie 22, lorsque la poutre 26 est en regard du microguide de sortie 22. Ceci assure l'équivalence des deux directions optiques de commutation. Cette disposition assure en outre le parallélisme de l'extrémité 22a du microguide et de la paroi 34a de l'évidement.

Pour une structure guide de type A les distances $\underline{d}$ et $\underline{d}'$ doivent être inférieures à 10 micromètres et par exemple égales à 5-8 micromètres, pour un couplage supérieur à 80%.

Pour des structures guides du type B, les distances $\underline{d}$ et $\underline{d}'$ doivent être au plus égales à 2 micromètres pour un couplage supérieur à 80%. La structure A est donc moins pénalisante que la structure B.

Conformément à l'invention, les déformations de la poutre de façon à amener en coïncidence l'extrémité 32a du microguide central avec, soit l'extrémité 20a du microguide de sortie 20, soit avec l'extrémité 22a du microguide 22, sont assurées, dans le mode de réalisation représenté sur les figures 2 et 3, à l'aide de condensateurs de capacité variable.

A cet effet, les surfaces latérales de l'évidement 24, au niveau de la structure guide 8, orientées selon la direction x sont équipées de métallisations respectivement 36 et 46. Par ailleurs, les faces latérales de la poutre 26 en regard, orientées selon la direction x lorsque celle-ci est au repos, sont équipées de métallisations respectivement 38 et 42.

Les métallisations 36 et 38 en regard constituent les armatures d'un premier condensateur à capacité variable auquel on peut appliquer une tension, grâce à une source d'alimentation électrique 40 reliée électriquement à ces armatures, via des conducteurs 42 disposés à la surface 8a de la structure guide 8.

De même, les métallisations 44 et 46 en regard constituent les armatures d'un second condensateur à capacité variable auquel peut être appliquée une tension, grâce à une source d'alimentation électrique 48 reliée à l'aide de fils conducteurs 50 disposés sur la surface 8a de la structure guide.

L'application d'une tension convenable aux bornes de ces condensateurs crée une force capacitive Fc, parallèle à la direction y, entraînant une déformation de la poutre 26 selon cette direction y. Cette force capacitive Fc est fonction des caractéristiques des condensateurs et est régie par l'équation :

$$Fc = 1/2 \ \varepsilon S V^2/e^2$$

où $\varepsilon$ est la constante diélectrique de l'air (de l'ordre de $10^{-11}$) ; V est a tension appliquée ; $\underline{e}$ est la distance moyenne séparant les métallisations 36 et 38 et respectivement 44 et 46 et S est la surface des métallisations en regard.

En particulier S=Lxh où L représente la longueur de la poutre, mesurée selon la direction x, et h son épaisseur, mesurée selon la direction z, perpendiculaire au plan xy.

Cette force capacitive Fc permet un déplacement latéral $x_c$ de l'extrémité libre de la poutre 26, selon y, donné par l'équation :

$$x_c = 3/2 Fc.h^{-1}(L/l)^3.E^{-1}$$

où E est le module d'Young ($7.10^{10} N/m^2$ pour la silice) et l représente la largeur de la poutre mesurée selon la direction y.

Dans le tableau 1, ci-après, on donne des exemples de déplacement latéral $x_c$ pour différentes valeurs de la tension appliquée aux condensateurs et différentes valeurs de la distance moyenne $\underline{e}$ séparant la armatures de ces condensateurs. Dans ces exemples, la poutre présentait les dimensions suivantes : L=5mm et l=h=30μm.

Les forces capacitives sont faibles et peuvent être mises en oeuvre essentiellement pour un commutateur optique à deux positions, comme représenté sur les figures 2 et 3 ou pour une matrice de commutation de faible complexité avec N=2 ou 3 et M=2 ou 3. En pratique, on prendra V de 30 à 40 volts et $\underline{e}$ de 15 à 20μm environ.

De façon à assurer un positionnement acceptable du microguide central 32 par rapport au microguide de sortie 20 ou 22 et donc un transfert de lumière tout à fait acceptable, il faut que la force Fg (figure 1) qui agit sur la poutre 26 ait un effet négligeable. Cette force peut être la force de pesanteur ou la résultante des forces appliquées à la poutre (pesanteur, accélération ... ou autre).

La déformation acceptable selon la direction z en bout de poutre, notée Zg doit être la plus petite possible et en pratique être inférieure à 0,5 micromètre pour une structure de type A. En dessous de 0,5 micromètre, le coefficient de couplage entre le microguide central et les microguides de sortie reste supérieur à 90% de sa valeur théorique.

Pour une structure de type B, Zg doit être inférieur à 0,05 micromètre.

La déformation Zg en bout de poutre s'exprime en fonction de la force Fg correspondant dans ce cas à la force de pesanteur, selon l'équation :

$$Zg = 3/2 Mg.l^{-1}(L/h)^3.E^{-1}$$

où l, L, h et E ont la même signification que précédemment, g représente l'accélération de la pesanteur et M est la masse de la poutre et est égal à $\rho.l.L.E$ avec $\rho$ la masse volumique qui vaut 2000 kg/m$^3$ environ pour la silice.

Pour une structure A monomode, on choisit h=l=30 micromètres, ce qui donne Zg=$0,0476 \times 10^4$.L$^2$ avec L en mètre. La condition Zg<0,5 micromètre entraîne alors L au plus égal à 5mm.

Dans les mêmes conditions, pour L=1mm, on obtient Zg=$4,76.10^{-4}$μm et pour L=10mm, on obtient Zg=4,7μm.

Pour une structure multimode, les valeurs de l et de h ainsi que celles de L sont plus élevées ; elles se déduisent des caractéristiques des fibres optiques multimodes utilisées.

Sur la figure 4, on a représenté schématiquement les étapes de fabrication du commutateur conforme à l'invention.

La première étape du procédé, représentée sur la partie $\underline{a}$ de la figure 4 consiste à réaliser la structure guide. Aussi, après formation de la couche tampon 12 par oxydation thermique du substrat 10 en atmosphère d'oxygène entre 800 et 1200°C ou aussi par dépôt CVD assisté ou non plasma, on effectue le dépôt d'une couche guide 13 de silice par LPCVD ou par PECVD (CVD assisté plasma) que l'on dope avec du phosphore par exemple.

On réalise ensuite par les procédés classiques de photolithographie un masque de résine positif 15 masquant d'une part la région centrale de la couche 13 en silice dopée que l'on désire garder pour constituer le microguide central 32 de la poutre, le microguide d'entrée 18 ainsi que le microguide de sortie 20 parallèles à la direction x et d'autre part, la région destinée à constituer le microguide de sortie 22.

On effectue alors une gravure anisotrope du type ionique réactive de la couche de silice dopée, avec du $CHF_3$ à une fréquence d'excitation du réactif de 13,6MHz; la gravure est effectuée sur toute l'épaisseur de la couche 13.

La référence 13a indique la partie gravée de la couche 13 qui constituera, après gravure de la poutre, le microguide central 32 de la poutre, le microguide d'entrée 18 et le microguide de sortie 20.

Aprés élimination du masque 15 avec un plasma d'oxygène, on effectue, comme représenté sur la partie b de la figure 4, le dépôt de la couche supérieure 16 sur l'ensemble de la structure par la technique de dépôt chimique en phase vapeur basse pression (LPCVD) ou assisté plasma (PECVD).

On réalise alors un nouveau masque 17 en résine par les procédés classiques de photolithogravure comportant des ouvertures 19 définissant la forme et les dimensions de l'évidement 24 et de la poutre 26. En particulier, ce masque 17 masque la majeure partie du microguide 13a.

On effectue ensuite une gravure anisotrope du type ionique réactive de l'empilement des couches de silice 16, 13 et 12 jusqu'au substrat 10, avec par exemple du $CHF_3$ et une fréquence d'excitation du réactif de 13,6MHz. La structure obtenue est celle représentée sur la partie c de la figure 4.

On effectue alors une gravure profonde isotrope mais partielle du silicium en utilisant le masque 19 ainsi que la structure en silice gravée comme masque. La gravure du substrat est effectuée avec une sélectivité supérieure à 100 en utilisant par exemple la technique de gravure ionique réactive avec du $SF_6$ et une fréquence micro-onde d'excitation du réactif typiquement de 2,45GHz.

La structure finale est celle représentée sur la partie d de la figure 4.

De façon à bien dégager la poutre 26 par en-dessous, il est nécessaire que la profondeur H de gravure séparant le dessous de la poutre 26 et le fond de l'évidement 24 soit supérieure à 1/2. En pratique, pour plus de sécurité, on choisit H au moins égal à L.

Avec le procédé de l'invention, le problème d'alignement vertical des microguides à commuter ne se pose pas puisque ceux-ci sont réalisés en même temps sur le substrat par des dépôts successifs de la couche tampon 12, de la couche guide 13 et de la couche de recouvrement 16 puis séparés par gravure notamment lors de la gravure de la poutre.

Les étapes suivantes de fabrication du commutateur selon l'invention concernent la fabrication des moyens de commande des déformations de la poutre.

Dans un système de commande capacitif, les armatures des condensateurs 36-38, 44-46 et les amenées de courant 42 et 50 à ces condensateurs sont réalisées indépendamment et successivement. Les armatures sont obtenues directement par évaporation sous vide ou pulvérisation d'un métal sous une incidence oblique, en utilisant un masque mécanique de forme approprié. Les amenées de courant sont obtenues par dépôt d'un métal sur l'ensemble de structure et gravure de ce dépôt, selon les motifs voulus, en utilisant un masque de gravure en résine approprié.

Ces armatures et amenées de courant sont réalisées en aluminium.

Conformément à l'invention, il est aussi possible d'assurer les déformations de la poutre 26 selon la direction y par effet inductif. Un mode de réalisation correspondant est représenté sur la figure 5, en vue de dessus.

Le commutateur optique représenté sur la figure 5 se différencie de celui représenté sur les figures 1 à 3, uniquement par les moyens d'excitation de la poutre 26.

A cet effet, plusieurs spires 52, ici 3, sont disposées à la surface de la poutre (parallèle au plan xy) et alimentées en courant $\vec{I}$ par une source d'alimentation électrique 54. Un champ magnétique $\vec{B}$ orienté perpendiculairement au plan xy du commutateur engendre une force $\vec{FI}$ (force de Laplace) selon la direction y.

Conformément à l'invention, les fils conducteurs constituant l'enroulement 52 sont obtenus par dépôt d'un métal et notamment d'aluminium, sur l'ensemble de la structure, puis gravure de ce métal selon les motifs voulus à l'aide d'un masque de photolithographie approprié. Un bloc d'isolants 55 doit être prévu à l'intersection des différentes spires pour isoler électriquement les fils conducteurs qui s'interceptent.

Le champ magnétique $\vec{B}$ est créé à l'aide d'un aimant 56 disposé par exemple, comme représenté sur les figures 6A et 7, sur un mur périphérique support isolant 58 prenant appui sur la périphérie de la structure guide 8. Les deux pôles 56a et 56b de l'aimant se situent au-dessus de l'enroulement 52. L'aimant peut être maintenu au-dessus du commutateur par l'intermédiaire d'un boîtier isolant 60.

La distance séparant les pôles 56a et 56b, notée D, doit être inférieure ou égale à la largeur l de la poutre 26.

Etant donné que les aimants disponibles au cobalt-samarium ne peuvent être miniaturisés à l'extrême et ont en général un entrefer D de quelques millimètres, il faut que les poutres aient une largeur de quelques millimètres, 3 millimètres en particulier. Aussi, pour une même longueur, la poutre commandée par effet inductif est 100 fois plus lourde que la poutre commandée par effet capacitif. Aussi, il est nécessaire d'alléger la poutre flexible commandée par induction.

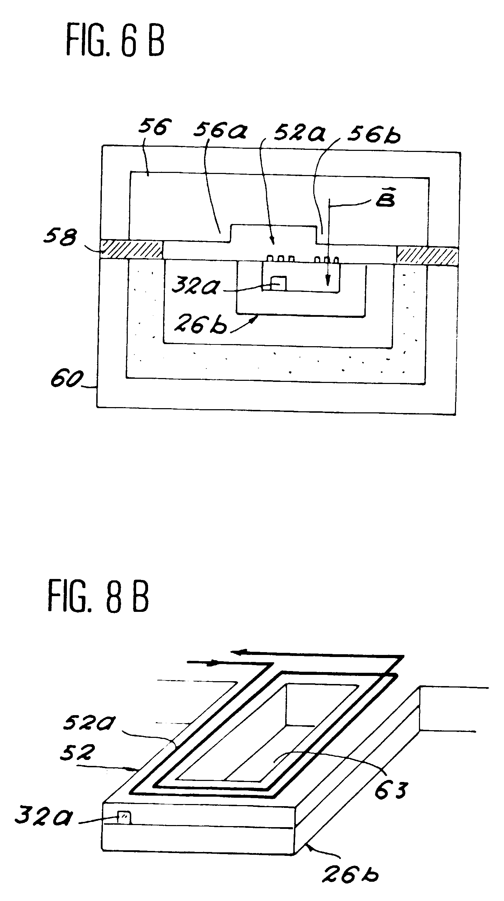

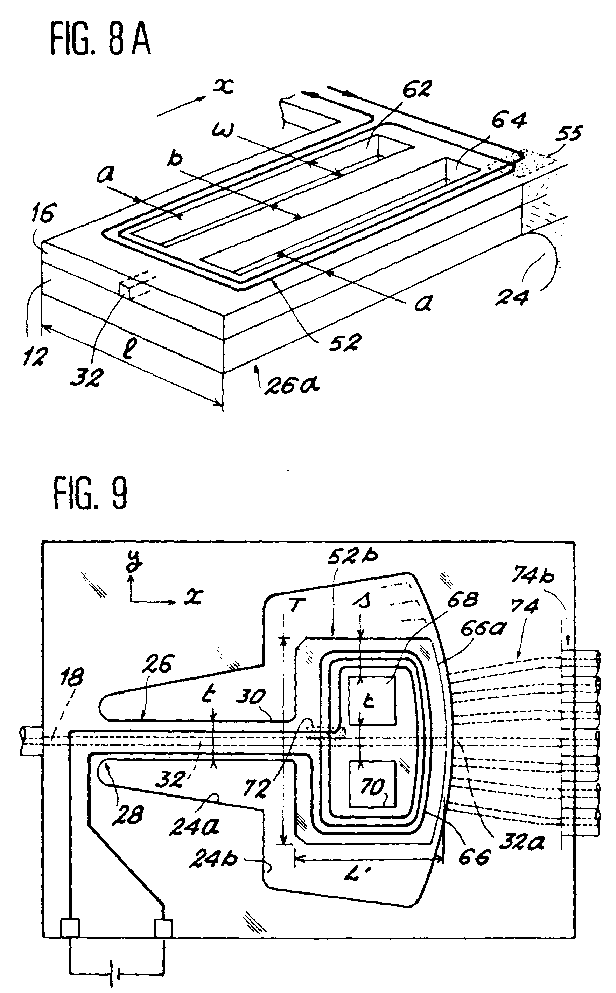

Une première solution est représentée sur la figure 8A. Pour des raisons de simplification, on n'a représenté que la poutre sur cette figure.

La poutre flexible de référence générale 26a est creusée, sur toute son épaisseur mesurée selon z, par deux évidements latéraux 62 et 64 de forme allongée, dont l'axe longitudinal est parallèle à la direction x, lorsque la poutre est au repos. Ces évidements 62 et 64 sont disposés de part et d'autre du microguide central 32 de la poutre 26a et assurent un allègement de la poutre.

A titre d'exemple, la distance séparant les évidements 62 et 64 de l'évidement principal 24 varie de 100 à 500 micromètres ; la distance b séparant les deux évidements 62 et 64 est de l'ordre de 30 micromètres et la largeur w des évidements 62 et 64 de 1 millimètre environ pour une poutre de largeur totale l de 3 millimètres.

L'allégement de la poutre, défini par la masse totale de la poutre sans évidement/la masse totale de la poutre avec évidement, est proportionnel à l/2a. Aussi, pour une largeur de poutre de 3 millimètres et une distance a de 500 micromètres, l'allègement est de 3. De même, pour une largeur de poutre de 3 millimètres et une distance a de 100 micromètres, l'allègement est de 15.

Une deuxième solution, correspondant aux figures 6B et 8B, consiste à utiliser un aimant dont l'un des pôles 52b est situé face à la partie 52a (par exemple) de l'enroulement 52, l'autre pôle 52a se trouvant bien au-delà de la poutre 26b qui est alors de plus petite dimension (100 µm environ) et de ce fait allégée.

Le mode de réalisation de la poutre 26b de la figure 8B se différentie de celui de la figure 8A par la présence d'un seul évidement central 63, assurant un allègement, et par la position latérale du microguide 32 de la poutre.

Bien entendu, cette solution présente l'inconvénient de diminuer la force appliquée à la poutre d'un facteur 2.

Une troisième possibilité d'allègement de la poutre, lorsque l'on utilise un effet inductif, est représentée sur la figure 9.

Sur cette figure, la poutre flexible 26 supporte à son extrémité libre 30 un bloc 66 réalisé aussi dans la structure guide en silice, destiné à se déformer selon la direction y, grâce à la force de Laplace. Ce bloc a une épaisseur h égale à celle de la poutre mais est plus large que la poutre 26. Le microguide central 32 de la poutre 26 se prolonge dans le bloc 66, jusqu'à son extrémité libre.

Ce dernier est équipé de deux évidements latéraux 68 et 70, disposés de façon symétrique de part et d'autre du microguide central 32.

De façon à permettre les déformations du bloc selon y, l'évidement principal 24a, défini dans la structure guide et le substrat, doit comporter une partie élargie 24b selon la direction y en regard du bloc 66.

Un enroulement 52b, déposé à la surface du bloc 66 parallèle au plan xy et dont les fils d'amenée s'étendent sur la poutre selon la direction x, permet, lorsque cet enroulement est parcouru par un courant électrique $\vec{I}$ et lorsqu'un champ magnétique $\vec{B}$ est appliqué perpendiculairement à la surface du bloc 66, de créer une force de Laplace selon la direction y.

Les déformations d'un côté ou de l'autre du bloc 66 selon la direction y sont assurées en modifiant le sens de circulation du courant dans l'enroulement (ou du champ magnétique appliqué).

Un bloc isolant électrique 72 est prévu à l'interception des spires de l'enroulement.

Les deux évidements 68 et 70 pratiqués sur toute la structure guide en silice dans le bloc 66 permettent d'alléger l'ensemble tout en augmentant la longueur totale de la partie flexible 26-66. En outre, ils permettent de mieux utiliser la force de Laplace concentrée à l'extrémité libre de la poutre.

Sur la figure 9, t représente la largeur de la poutre mesurée selon la direction y. Cette distance est égale aussi à celle séparant les deux évidements 70 et 68 du bloc 66. T représente la largeur totale du bloc 66 mesurée selon la direction y. L' représente la longueur du bloc 66 mesurée selon la direction x et s représente la distance séparant chaque évidement 68 ou 70 de la partie 24b de l'évidement principal, mesurée selon y.

Conformément à l'invention, la distance séparant l'évidement principal des évidements latéraux de la poutre (a figure 8) ou du bloc terminal (s figure 9) doit permettre de graver plusieurs spires de 10 micromètres environ et séparées de 10 µm. Soit K le nombre de spires, a et s doivent être supérieurs à 20 (K+1).

Le bloc 66 est soumis à une force de Laplace $F_L$ égale à 2BKIL' et le déplacement dû à cette force, noté $x_L$ est donné par la relation :

$$x_L = 4F_L \cdot h^{-1} \cdot (L/l)^3 \cdot E^{-1}.$$

Dans la configuration représentée sur la figure 9, le déplacement Zg minimum acceptable selon z, dû à la force de pesanteur est égal à $4Mgl^{-1}(L/h)^3E^{-1}$. Dans cette équation, M représente la masse du bloc 66. En outre, cette équation a été déterminée en supposant que la masse M est ponctuelle et se situe en bout de poutre.

En négligeant le poids de la poutre devant celle du bloc 26, on obtient $Zg=22L^3$. Aussi, pour L=1mm, on a Zg=22nm et pour L=3mm, Zg est égal à 0,6 micromètre.

Dans le tableau II ci-après, on donne des exemples de $x_L$ pour différentes longueurs L de poutre et différents nombres de spires de l'enroulement 52a. Les résultats portés dans ce tableau ont été établis pour les valeurs suivantes : h=t=30 micromètres, s=100 micromètres, T=3 millimètres, L'=1 millimètre. La valeur du champ magnétique $\vec{B}$ était de 1 tesla et l'intensité du courant traversant l'enroulement 52b était de 10 milliampères.

Le composant optique représenté sur la figure 9 peut, contrairement aux autres modes de réalisation décrits précédemment, être utilisé pour une matrice de commutation complexe. La détermination de x permet de calculer le nombre de microguides d'entrée et de sortie.

Ce composant permet la commutation d'un faisceau incident véhiculé par un microguide d'entrée 18, situé au centre la structure et dans le prolongement du microguide central 32 de la poutre 26 et du bloc 66, vers l'un des microguides de sortie 74, ici sept.

Conformément à l'invention, ces microguides de sortie 74 sont disposés en éventail, la distance les séparant s'élargissant de leur entrée 74a vers leur sortie 74b.

Afin d'assurer une distance constante entre l'extrémité 32a du microguide central de l'ensemble poutre-blocet les extrémités d'entrée 74a des microguides de sortie, il est possible, comme représenté sur la figure 9, que la paroi 24c de l'évidement 24a, où affleure l'extrémité 74a des microguides, et la face 66a du bloc 66 en regard, orientées sensiblement selon la direction y, aient la forme d'arcs de cercle concentriques centrés sur l'extrémité fixe 28 ou charnière de la poutre flexible 26.

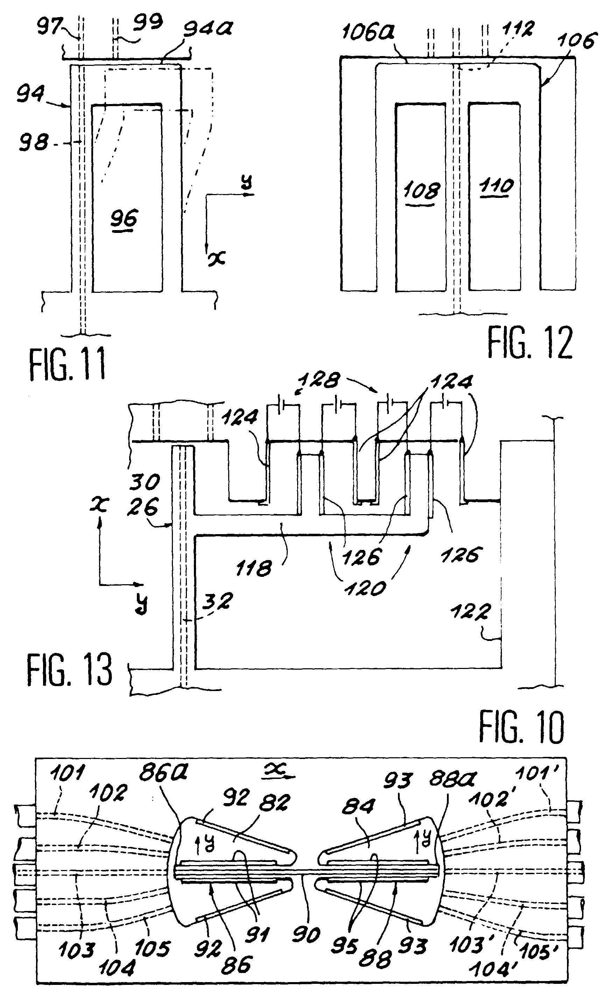

Selon l'invention, il est aussi possible de réaliser une matrice de commutation telle que représentée sur la figure 10. Cette matrice comporte plusieurs microguides d'entrée 101, 102, 103, 104, 105 et plusieurs microguides de sortie 101', 102', 103', 104' et 105', destinés à être couplés respectivement à des fibres optiques d'entrée 78 et de sortie 80.

Les microguides d'entrée sont disposés en un éventail allant en s'élargissant de leur sortie vers leur entrée de façon à assurer la connexion avec les fibres optiques d'entrée. De même, les microguides de sortie sont disposés en un éventail s'élargissant de leur entrée vers leur sortie de façon à assurer la connexion avec les fibres optiques de sortie 80. Ces microguides d'entrée et de sortie sont sensiblement parallèles à la direction x.

Ce commutateur comporte en outre deux évidements distincts 82 et 84 pratiqués dans la structure guide et dans le substrat et disposés dans le prolongement l'un de l'autre entre les microguides d'entrée et les microguides de sortie. Deux poutres flexibles 86 et 88 solidaires l'une de l'autre par leur extrémité fixe et disposées dans le prolongement l'une de l'autre selon la direction x, sont aptes à se déformer respectivement dans les évidements 82 et 84 selon la direction y. Elles comportent un microguide central qui constitue en fait un microguide central unique 90.

De façon imagée, les évidements 82 et 84 représentent les ailes déployées d'un papillon dont le corps constitue la charnière des poutres 86 et 88.

Ces poutres 86 et 88 peuvent être déformées indépendamment l'une de l'autre. A cet effet, des métallisations sont prévues sur les faces latérales respectivement 91 et 95 des poutres 86 et 88 et sur les faces latérales respectivement 92 et 93 des évidements 82 et 84 en regard, de façon à définir deux condensateurs de capacité variable pour chaque poutre.

Sur la figure 10, on a représenté la commutation du faisceau lumineux incident véhiculé par le microguide d'entrée 103 vers le microguide de sortie 103', via le microguide central 90 des poutres flexibles.

Bien entendu, les déformations des poutres 86 et 88 selon la direction y peuvent aussi être obtenues par effet inductif comme décrit précédemment.

Conformément à l'invention, différentes formes de poutres flexibles peuvent être envisagées comme représenté sur les figures 11 et 12.

Sur la figure 11, la poutre flexible 94 est relativement large et comporte un évidement central 96 orienté parallèlement à la direction x, traversant la structure guide en silice de part en part. L'un des bras longitudinaux de la poutre est équipé d'un microguide central 98 destiné à être amené dans le prolongement des microguides de sortie 97 et 99 par déformation de la poutre selon la direction y.

Sur la figure 12, la poutre flexible 106 est encore large et comporte deux évidements latéraux 108 et 110 pratiqués dans la structure guide et disposés symétriquement par rapport au microguide central 112 ; ils s'étendent selon la direction x.

Les déformations des poutres 94 (figure 11) et 106 (figure 12) peuvent être assurées aussi bien par un effet capacitif que par un effet inductif. Dans ces modes de réalisation, les extrémités libres respectivement 94a et 106a des poutres restent parallèles à la direction y au cours des déformations des poutres.

Sur la figure 13, le commutateur optique représenté comporte une poutre principale flexible 26 équipée de son microguide central 32 et orientée selon la direction x ainsi qu'une poutre de rappel 118 parallèle à la direction y et solidaire de la poutre principale 26. Le point de fixation de la poutre de rappel sur la poutre principale 26 se situe par exemple aux 3/4 de celle-ci, du côté de l'extrémité libre 30.

Cette poutre de rappel 118 est en outre équipée de poutrelles 120 parallèles entre elles et à la direction x. Cette poutre de rappel et ses poutrelles sont définies dans la structure guide 8.

L'ensemble 26-118-120 est destiné à se déformer selon la direction y dans un évidement 122 de forme appropriée, pratiqué dans la structure en silice et dans le substrat.

Ce mode de réalisation est surtout intéressant lorsque l'on commande les déformations de la poutre 26 par effet capacitif. A cet effet, l'évidement 122 comporte des décrochements en forme de créneaux dont les parois latérales, parallèles à la direction x, sont équipées de métallisations 124. Les poutrelles 120 s'imbriquent dans ces créneaux et sont équipées sur leurs faces latérales parallèles à la direction x de métallisations 126, disposées respectivement en regard des métallisation 124. Chaque couple de métallisation 124 et 126 constitue un condensateur de capacité variable aux bornes duquel on peut appliquer une différence de potentiel grâce à une source d'alimentation électrique 128.

Ce mode de réalisation permet d'augmenter les surfaces métalliques en regard et donc la force capacitive nécessaire aux déformations selon la direction y de la poutre 26. Ainsi, les tensions appliquées peuvent être plus faibles que celles utilisées précédemment.

Bien entendu d'autres modes de réalisation de poutres flexibles peuvent être envisagés sans pour autant sortir du cadre de l'invention.

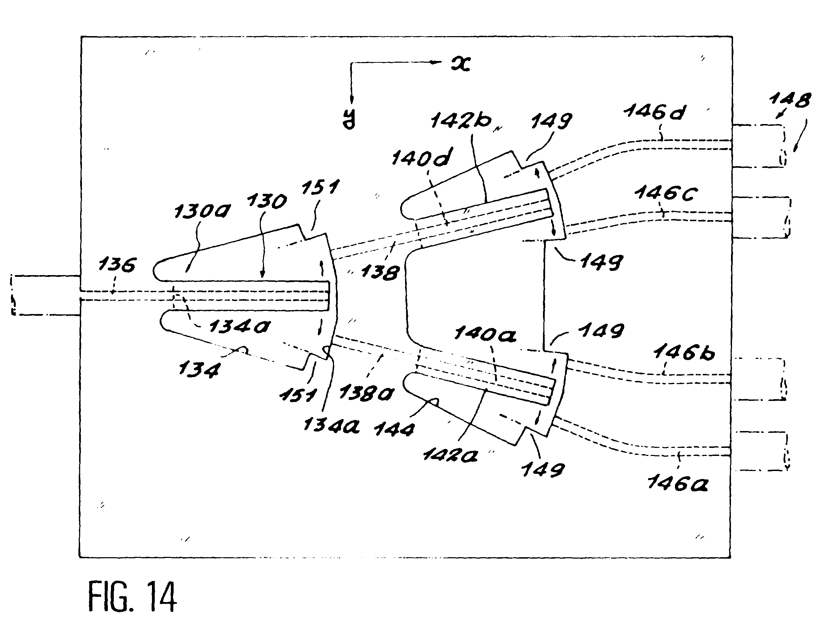

Par ailleurs, comme représenté sur la figure 14, il est possible de disposer plusieurs commutateurs en cascade, équipés de leurs poutres.

Sur la figure 14, une première poutre 130 équipée de son microguide 132 et orientée selon la direction x permet, par déformation dans la direction y dans un premier évidement approprié 134, d'assurer la commutation d'un faisceau incident véhiculé par un microguide d'entrée 136 vers deux microguides de sortie 138a et 138b, disposés en éventail. (Ici les microguides 138a, 138b sont linéaires et non plus formés de deux parties formant un angle entre elles).

Ces microguides 138a-138b sont disposés dans le prolongement de microguides centraux 140a et 140b respectivement de deux poutres flexibles 142a, 142b aptes à se déformer selon la direction y dans un second évidement 144, distinct de l'évidement 134.

Ces deux poutres 142a-142b sont disposées sensiblement selon la direction x en éventail et permettent chacune la commutation des faisceaux incidents véhiculés respectivement par les microguides 138a-138b vers deux microguides de sortie.

En particulier, la poutre flexible 142a assure la commutation du faisceau lumineux issu du microguide 138a vers les deux microguides 146a et 146b adjacents et la poutre flexible 142b assure la commutation du faisceau lumineux issu du microguide 138b vers les microguides de sortie adjacents 146c et 146d.

Les microguides de sortie 146a-146d sont disposés en éventail et comportent en sortie une partie strictement parallèle à la direction x pour être connectée à une fibre de sortie 148 (autant de fibres de sortie que de microguides de sortie).

Dans ce mode de réalisation, les poutres 130, 142a et 142b sont des poutres à deux positions. Des butées 149 sont prévues sur la paroi 144a de l'évidement 144, où débouchent les microguides de sortie 146a-146d, pour limiter les déformations des poutres. De même, des butées 151 sont prévues sur la paroi 134a où débouchent les microguides 138a et 138b.

Ces butées 149 ou 151 sont au nombre de deux pour chaque poutre et légèrement décalées par rapport aux microguides de sortie. Les butées associées à chaque poutre sont disposées de part et d'autre du couple de microguides de sortie associé aux poutres.

Les microguides 136, 138a-138b et la poutre 130 constituent un premier commutateur et les microguides 138a-138b, 146a-146d et les poutres 142a-142b constituent un second commutateur. Ces commutateurs sont fabriqués simultanément.

Dans ce mode de réalisation, la paroi 134a de l'évidement 134, où débouchent les microguides de sortie 138a-138b, et la paroi 144a de l'évidement 144 ont la forme d'arcs de cercle concentriques, centrés sur l'extrémité fixe 130a de la première poutre 130.

Le système de commutation de la figure 14 présente une stabilité et une insensibilité aux vibrations meilleures que celles des commutateurs équipés de poutres à plus de deux positions (trois ou quatre par exemple).

Les butées 149 sont réalisées, bien entendu, lors de la réalisation de l'évidement 144 dans lequel se déplacent les deux poutres 142a-142b, sur toute l'épaisseur de la structure guide. De même, les butées 151 sont réalisées en même temps que l'évidement 134.

Par ailleurs, il est possible de réaliser de telles butées dans toutes les variantes de réalisation d'un commutateur conforme à l'invention, équipé d'une poutre à deux positions et en particulier dans les réalisations des figures 2, 3 et 5. (Voir en particulier la référence 33 sur la figure 3).

TABLEAU I

| e (µm) | 40 | 40 | 40 | 40 | 40 | 20 | 20 | 20 |
|---|---|---|---|---|---|---|---|---|
| V(volts) | 10 | 30 | 50 | 80 | 100 | 10 | 30 | 50 |
| $x_c$ (µm) | 0,15 | 1,35 | 3,75 | 9,6 | 15 | 0,6 | 5,4 | 9,6 |

TABLEAU II

| K | 1 | 1 | 1 | 5 | 5 | 5 |
|---|---|---|---|---|---|---|
| L (mm) | 1 | 2 | 3 | 1 | 2 | 3 |
| $x_L$ (μm) | 1,4 | 11,2 | 37,8 | 7 | 56 | 189 |

**Revendications**

1. Commutateur optique multivoie réversible comportant : au moins une couche tampon (12), au moins un évidement (24, 24a, 82, 84, 122, 134, 144) pratiqué dans la couche tampon, au moins un microguide optique d'entrée (18, 101-105, 136, 138a-138b) supporté par la couche tampon et orienté selon une première direction (x) pour véhiculer un faisceau lumineux incident (I) à commuter, au moins deux microguides optiques de sortie (20, 22, 74, 101'-105', 138a-138b, 146a-146d) adjacents et sensiblement parallèles à la première direction, supportés par la couche tampon pour véhiculer le faisceau lumineux commuté (C), les microguides de sortie et le microguide d'entrée étant disposés dans leur prolongement, au moins une poutre flexible (26, 26a, 26b, 86, 88, 94, 106, 130, 142a-142b) définie dans la couche tampon et équipée d'un microguide optique central (32, 32a, 90, 98, 112, 132, 140a-140b) sur toute sa longueur et orientée selon la première direction (x), la poutre comportant une extrémité fixe (28, 130a) et une extrémité libre (30, 94a, 106a) apte à se déformer dans ledit évidement selon une seconde direction (y) perpendiculaire à la première direction, le microguide central étant situé dans le prolongement du microguide d'entrée, g) des moyens d'excitation (36-38-40, 44-46-48, 52-54-56, 52a, 91-92, 93-95, 124-126-128) pour engendrer des déformations de la poutre selon la seconde direction (y) de façon à amener l'extrémité libre du microguide central dans le prolongement de l'un des microguides de sortie et commuter ainsi le faisceau incident, caractérisé en ce que le commutateur optique est un commutateur optique intégré, en ce qu'il comprend en outre un substrat mono cristallin (10), en ce que la couche tampon (12) est supportée par le substrat, en ce que l'évidement est pratiqué en outre dans le substrat, en ce que les première et seconde directions sont parallèles à la surface de substrat, en ce que les microguides de sortie et le microguide d'entrée sont disposés de part et d'autre de l'évidement, en ce que l'extrémité fixe de la poutre flexible est solidaire du substrat et en ce que le commutateur comprend une poutre de rappel (118) définie dans la couche tampon et orientée selon la seconde direction (y).

2. Commutateur optique selon la revendication 1, caractérisé en ce qu'il comprend 1) au moins deux microguides optiques d'entrée adjacents (101-105), sensiblement parallèles à la première direction, 2) au moins deux microguides optiques de sortie (101'-105'), 3) un premier et un second évidements distincts (82, 84), pratiqués dans le substrat et la couche tampon et disposés dans le prolongement l'un de l'autre entre les microguides d'entrée et de sortie, 4) une première poutre (86) et une seconde poutre (88) solidaires par leur extrémité fixe et disposées dans le prolongement l'une de l'autre de façon que leurs microguides centraux (90) soient en coïncidence et orientés selon la première direction (x), l'extrémité libre (86a) de la première poutre étant apte à se déformer dans le premier évidement et l'extrémité libre (88a) de la seconde poutre étant apte à se déformer dans le second évidement, 5) des premiers moyens (91-92) pour engendrer des déformations de la première poutre de façon à amener l'extrémité libre de son microguide central dans le prolongement de l'un des microguides d'entrée (101-105) et 6) des seconds moyens (93-95) pour engendrer des déformations de la seconde poutre de façon à amener l'extrémité libre de son microguide central dans le prolongement de l'un des microguides de sortie (101'-105').

3. Commutateur optique selon la revendication 1 ou 2, caractérisé en ce que l'extrémité libre (30) de la poutre (26) supporte un bloc (66) réalisé dans la couche tampon et apte à se déplacer dans ledit évidement selon la seconde direction (y), ce bloc comportant un microguide central (32) prolongeant le microguide central de la poutre et des évidements (68, 70) de part et d'autre de son microguide central.

4. Commutateur optique selon l'une quelconque des revendications 1 à 3, caractérisé en ce que la poutre (26a, 94, 106) comporte en dehors du microguide central au moins un évidement (62, 64, 63, 96, 108, 110) destiné à alléger la poutre.

5. Commutateur optique selon la revendication 4, caractérisé en ce que la poutre (26a, 106) comporte un évidement (62-64, 108-110) de part et d'autre de son microguide central.

6. Commutateur optique selon l'une quelconque des revendications 1 à 5, caractérisé en ce que la poutre de rappel (118) est équipée de poutrelles (120) parallèles à la première direction (x), pourvues chacune d'une métallisation (126) définissant avec les surfaces en regard de l'évidement (122) métallisées (124) des condensateurs de capacité variable.

**7.** Commutateur optique selon la revendication 1 ou 2, caractérisé en ce qu'il comprend plusieurs poutres (142a-142b) sensiblement parallèles à la première direction-dont l'extrémité libre est apte à se déformer dans ledit évidement (144).

**8.** Commutateur optique selon l'une quelconque des revendications 1 à 7, caractérisé en ce qu'au moins une butée (149, 151) est prévue dans ledit évidement (134, 144) à proximité de l'un des microguides de sortie.

**9.** Commutateur optique selon l'une quelconque des revendications 1 à 8, caractérisé en ce que les moyens d'excitation comportent au moins une spire (52) conductrice de l'électricité disposée à la surface de la poutre et à sa périphérie, des moyens (54) pour alimenter en courant électrique la spire et des moyens (56) pour créer un champ magnétique orienté perpendiculairement à la surface de la poutre.

**10.** Commutateur optique selon l'une quelconque des revendications 1 à 8, caractérisé en ce que les moyens d'excitation comportent au moins un condensateur (36-38, 44-46, 91-92, 93-95, 124-126) de capacité variable dont les armatures sont parallèles à la première direction (x), l'une des armatures (38, 44, 91, 95, 126) étant mobile et solidaire de la poutre et l'autre armature (36, 46, 92, 93, 124) étant fixe et solidaire de l'évidement, et des moyens pour appliquer une différence de potentiel entre ces armatures.

**11.** Commutateur optique selon la revendication 3, caractérisé en ce que les moyens d'excitation comportent au moins une spire (52b) conductrice de l'électricité disposée à la surface du bloc et à sa périphérie, des moyens (54) pour alimenter en courant électrique cette spire et des moyens (56) pour créer un champ magnétique perpendiculairement à la surface du bloc.

**12.** Commutateur optique selon l'une quelconque des revendications 1 à 11, caractérisé en ce que la couche tampon et les microguides sont recouverts complètement d'une couche supérieure (16) ayant un indice de réfraction inférieur à celui des microguides.

**13.** Commutateur optique selon la revendication 12, caractérisé en ce que le substrat est en silicium, la couche tampon et la couche supérieure sont en silice non intentionnellement dopée et les microguides sont en silice dopé avec des dopants augmentant son indice de réfraction.

**14.** Commutateur optique selon l'une quelconque des revendications 1 à 13, caractérisé en ce que les distances séparant l'extrémité libre (30) de la poutre de l'extrémité d'entrée (20a, 22a, 74a) de chaque microguide de sortie sont égales.

**15.** Commutateur optique selon la revendication 14, caractérisé en ce que ces distances sont inférieures à 10 micromètres.

**16.** Commutateur optique selon l'une quelconque des revendications 2 à 15, caractérisé en ce que les microguides de sortie sont répartis en éventail s'élargissant de leur entrée vers leur sortie et en ce que les microguides d'entrée sont répartis en éventail s'élargissant de leur sortie vers leur entrée.

**17.** Commutateur optique selon l'une quelconque des revendications 2 à 16, caractérisé en ce que la distance minimale séparant les microguides d'entrée et respectivement de sortie vaut de 10 à 20 micromètres.

**18.** Système de commutation optique intégré multivoie réversible, caractérisé en ce qu'il comprend plusieurs commutateurs optiques (figure 14) selon l'une quelconque des revendications 1 à 17, disposés en cascade.

**19.** Procédé de fabrication d'un commutateur optique selon l'une quelconque des revendications 1 à 17, caractérisé en ce qu'il comprend les étapes suivantes :

a) - formation d'au moins une couche tampon (12) sur le substrat (10) , équipée d'un microguide central (13a) sur toute sa longueur, orienté selon la première direction (x), et d'au moins un microguide de sortie (22) sensiblement parallèle au microguide central (13a) et s'étendant sur une partie seulement de la couche tampon,
b) - réalisation d'un masque (17) au-dessus de la couche tampon définissant les formes respectives de l'évidement et des poutres entre autres ladite poutre de rappel (118), ce masque masquant la majeure partie du microguide central (13a),

c) - gravure de la couche tampon jusqu'au substrat pour former les poutres, puis

d) - gravure partielle isotrope du substrat pour dégager le dessous des poutres et former l'évidement, cette gravure étant réalisée sur une profondeur supérieure à l/2 où l représente la largeur de la poutre flexible mesurée selon la seconde direction (y) mais inférieure à l'épaisseur totale du substrat,

e) - élimination du masque, et

f) - réalisation des moyens d'excitation de la poutre flexible.

**20.** Procédé selon la revendication 19, caractérisé en ce que la couche tampon est gravée de façon anisotrope.

**21.** Procédé selon la revendication 19 ou 20, caractérisé en ce que l'étape a) consiste à déposer la couche tampon (12) sur le substrat, à déposer une couche guide (13) sur la couche tampon présentant un indice de réfraction supérieur à celui de la couche tampon et à graver la couche guide sur toute son épaisseur pour former simultanément le microguide central (13a) et te microguide de sortie (22).

**Patentansprüche**

**1.** Umschaltbarer optischer Mehrweg-Schalter, umfassend: wenigstens eine Pufferschicht (12), wenigstens eine Aussparung (24, 24a, 82, 84, 122, 134, 144) in der Pufferschicht, wenigstens einen optischen Eingangsmikroleiter (18, 101-105, 136, 138a-138b), getragen durch die Pufferschicht und ausgerichtet entsprechend einer ersten Richtung (x), um ein eintreffendes und zu schaltendes Lichtbündel l zu leiten, wenigstens zwei optische Ausgangsmikroleiter (20, 22, 74, 101'-105',138a-138b, 146a-146d), nebeneinanderliegend und im wesentlichen parallel zur ersten Richtung, getragen durch die Pufferschicht, um das geschaltete Lichtbündel (C) zu leiten, wobei die Ausgangsmikroleiter und der Eingangsmikroleiter in ihrer Verlängerung angeordnet sind, wenigstens ein flexibler Träger (26, 26a, 26b, 86, 88, 94, 106, 130, 142a-142b), definiert in der Pufferschicht und ausgestattet mit einem zentralen optischen Mikroleiter (32, 32a, 90, 98, 112, 132, 140a-140b) über seine gesamte Länge und ausgerichtet entsprechend der ersten Richtung (x), wobei der Träger ein feststehendes Ende (28, 130a) umfaßt und ein freies Ende (30, 94a, 106a), das sich in der genannte Aussparung nach einer zweiten Richtung (y) verformen kann, senkrecht zur ersten Richtung, wobei der zentrale Mikroleiter sich in der Verlängerung des Eingangsmikroleiters befindet, Erregereinrichtungen (36-38-40, 44-46-48, 52-54-56, 52a, 91-92, 93-95, 124-l26-128), um Verformungen des Trägers nach der zweiten Richtung (y) zu erzeugen, so daß das freie Ende des zentralen Mikroleiters in die Verlängerung eines der Ausgangsmikroleiter gebracht wird und das eintreffende Lichtbündel somit geschaltet wird, **dadurch gekennzeichnet,**

daß der optische Schalter ein integrierter optischer Schalter ist, daß er außerdem ein monokristallines Substrat (10) umfaßt, daß die Pufferschicht (12) getragen wird durch das Substrat, daß die erste und die zweite Richtung parallel zu der Oberfläche des Substrats sind, daß die Ausgangsmikroleiter und der Eingangsmikroleiter beiderseits der Aussparung angeordnet sind, daß das feststehende Ende des flexiblen Trägers fest verbunden ist mit dem Substrat und daß der Schalter einen Rückstellträger (118) umfaßt, definiert in der Pufferschicht und ausgerichtet entsprechend der zweiten Richtung (y).

**2.** Optischer Schalter nach Anspruch 1, dadurch gekennzeichnet, daß er umfaßt: 1) wenigstens zwei nebeneinanderliegende optische Mikroleiter (101-105), im wesentlichen parallel zu der ersten Richtung, 2) wenigstens zwei optische Ausgangsmikroleiter (101'-105'), 3) zwei verschiedene Aussparungen, eine erste (82) und eine zweite (84), jeweils in dem Substrat und in der Pufferschicht und angeordnet in der gegenseitigen Verlängerung zwischen den Eingangs- und Ausgangsmikroleitern, 4) einen ersten Träger (86) und einen zweiten Träger (88), fest verbunden durch ihre feststehenden Enden und in der gegenseitigen Verlängerung angeordnet, so daß ihre zentralen Mikroleiter (90) übereinstimmen bzw. fluchten und ausgerichtet sind entsprechend der ersten Richtung (x), wobei das freie Ende (86a) des ersten Trägers sich in der ersten Aussparung verformen kann und das freie Ende (88a) des zweiten Trägers sich in der zweiten Aussparung verformen kann, 5) erste Einrichtungen (91-92) zum Erzeugen der Verformungen des ersten Trägers, um das freie Ende seines zentralen Mikroleiters in die Verlängerung eines der Eingangsmikroleiter (101-105) zu bringen und 6) zweite Einrichtungen (93-95) zum Erzeugen der Verformungen des zweiten Trägers, um das freie Ende seines zentralen Mikroleiters in die Verlängerung eines der Ausgangsmikroleiter (101'-105') zu bringen.

**3.** Optischer Schalter nach Anspruch 1 oder 2, dadurch gekennzeichnet, daß das freie Ende (30) des Trägers (26) einen Block (66) trägt, hergestellt in der Pufferschicht und fähig, sich in der genannten Aussparung entsprechend der zweiten Richtung (y) zu bewegen, wobei dieser Block einen zentralen Mikroleiter (32) umfaßt, der den zentralen Mikroleiter des Trägers verlängert, und Aussparungen (68, 70) beiderseits seines zentralen Mikroleiters.

4. Optischer Schalter nach einem der Ansprüche 1 bis 3, dadurch gekennzeichnet, daß der Träger (26a, 94, 106) außerhalb des zentralen Mikroleiters wenigstens eine Aussparung (62, 64, 63, 96, 108, 110) umfaßt, um den Träger leichter zu machen.

5. Optischer Schalter nach Anspruch 4, dadurch gekennzeichnet, daß der Träger (26a, 106) eine Aussparung (62-64, 108-110) beiderseits seines zentralen Mikroleiters umfaßt.

6. Optischer Schalter nach einem der Ansprüche 1 bis 5, dadurch gekennzeichnet, daß der Rückstellträger (118) mit zur ersten Richtung (x) parallelen Stäben (120) ausgestattet ist, jeder versehen mit einer Metallisierung (126), die mit den gegenüberstehenden metallisierten Flächen (124) der Aussparung (122) Kondensatoren variabler Kapazität definiert.

7. Optischer Schalter nach Anspruch 1 oder 2, dadurch gekennzeichnet, daß er mehrere zur ersten Richtung im wesentlichen parallele Träger (142a-142b) umfaßt, deren freies Ende sich in der genannten Aussparung (144) verformen kann.

8. Optischer Schalter nach einem der Ansprüche 1 bis 7, dadurch gekennzeichnet, daß wenigstens ein Anschlag (149, 151) in besagter Aussparung (134, 144) vorgesehen ist, in der Nähe eines der Ausgangsmikroleiter.

9. Optischer Schalter nach einem der Ansprüche 1 bis 8, dadurch gekennzeichnet, daß die Erregereinrichtungen wenigstens eine elektrisch leitfähige Windung (52) umfassen, angeordnet auf der Oberfläche des Trägers und an seiner Peripherie, sowie Einrichtungen (54) zur Versorgung der Windung mit elektrischem Strom, und Einrichtungen (56) zur Erzeugung eines senkrecht zu der Oberfläche des Trägers ausgerichteten Magnetfelds.

10. Optischer Schalter nach einem der Ansprüche 1 bis 8, dadurch gekennzeichnet, daß die Erregereinrichtungen umfassen: wenigstens einen Kondensator (36-38, 44-46, 91-92, 93-95, 124-126) mit variabler Kapazität, dessen Belegungen zur ersten Richtung (x) parallel sind, wobei eine der Belegungen (38, 44, 91, 95, 126) beweglich ist und fest mit dem Träger verbunden ist und die andere Belegung (36, 46, 92, 93, 124) feststehend ist und fest mit der Aussparung verbunden ist, und Einrichtungen, um zwischen diesen Belegungen eine Potentialdifferenz anzulegen bzw. herzustellen.

11. Optischer Schalter nach Anspruch 3, dadurch gekennzeichnet, daß die Erregereinrichtungen wenigstens eine elektrisch leitfähige Windung (52b) umfassen, angeordnet auf der Oberfläche des Blocks und an seiner Peripherie, sowie Einrichtungen (54), um diese Windung mit elektrischen Strom zu versorgen, und Einrichtungen (56), um ein zur Oberfläche des Blocks senkrechtes Magnetfeld zu erzeugen.

12. Optischer Schalter nach einem der Ansprüche 1 bis 11, dadurch gekennzeichnet, daß die Pufferschicht und die Mikroleiter vollständig überzogen sind mit einer oberen Schicht (16) mit einer Brechzahl, die kleiner ist als die der Mikroleiter.

13. Optischer Schalter nach Anspruch 12, dadurch gekennzeichnet, daß das Substrat aus Silicium ist, die Pufferschicht und die obere Schicht aus nicht absichtlich dotiertem Siliciumdioxid sind, und die Mikroleiter aus Siliciumdioxid sind, das mit Dotierstoffen dotiert ist, die seine Brechzahl erhöhen.

14. Optischer Schalter nach einem der Ansprüche 1 bis 13, dadurch gekennzeichnet, daß die Abstände, welche die freien Enden (30) des Trägers des Eingangendes (20a, 22a, 74a) jedes Ausgangsmikroleiters trennen, gleich sind.

15. Optischer Schalter nach Anspruch 14, dadurch gekennzeichnet, daß die Abstände kleiner als 10 Mikrometer sind.

16. Optischer Schalter nach einem der Ansprüche 2 bis 15, dadurch gekennzeichnet, daß die Ausgangsmikroleiter fächerförmig verteilt sind, sich dabei von ihrem Eingang zu ihrem Ausgang verbreiternd, und daß die Eingangsmikroleiter fächerförmig verteilt sind, sich dabei von ihrem Ausgang zu ihrem Eingang verbreiternd.

17. Optischer Schalter nach einem der Ansprüche 2 bis 16, dadurch gekennzeichnet, daß der die Eingangs- und die Ausgangsmikroleiter jeweils trennende Mindestabstand 10 bis 20 Mikrometer beträgt.

18. Integriertes umschaltbares optisches Mehrweg-Schaltsystem, dadurch gekennzeichnet, daß es mehrere kaskadenförmig angeordnete optische Schalter nach einem der Ansprüche 1 bis 17 umfaßt (Figur 14).

19. Herstellungsverfahren eines optischen Schalters nach einem der Ansprüche 1 bis 17, dadurch gekennzeichnet, daß es die folgenden Schritte umfaßt:

a) Bilden von wenigstens einer Pufferschicht (12) auf dem Substrat (10), ausgestattet mit einem zentralen Mikroleiter (13a) über seine gesamte Länge, ausgerichtet entsprechend der ersten Richtung (x), und wenigstens einen Ausgangsmikroleiter (22), im wesentlichen parallel zu dem zentralen Mikroleiter (13a) und sich nur über einen Teil der Pufferschicht erstreckend,
b) Herstellen einer Maske (17) über der Pufferschicht, die die jeweiligen Formen der Aussparung oder der Träger, u.a. des Rückstellträgers (118) definiert, wobei diese Maske den größten Teil des zentralen Teils des Mikroleiters (13a) maskiert,
c) Ätzen der Pufferschicht bis zum Substrat, um die Träger zu bilden, dann
d) isotropes partielles Ätzen des Substrats, um die Unterseite der Träger freizumachen und die Aussparung zu bilden, wobei diese Ätzung auf eine Tiefe von mehr als 1/2 - wo 1 die Breite des flexiblen Trägers darstellt, gemessen in der zweiten Richtung (y) - aber weniger als der Gesamtdicke des Substrats durchgeführt wird.
e) Entfernen der Maske, und
f) Herstellen der Erregereinrichtungen für den flexiblen Träger.

20. Verfahren nach Anspruch 19, dadurch gekennzeichnet, daß die Pufferschicht anisotrop geätzt wird.

21. Verfahren nach Anspruch 19 oder 20, dadurch gekennzeichnet, daß der Schritt a) darin besteht, die Pufferschicht (12) auf das Substrat aufzubringen, eine Leiterschicht (13) mit einer Brechzahl höher als die der Pufferschicht auf die Pufferschicht aufzubringen und die Leiterschicht über ihre gesamte Dicke zu ätzen, um gleichzeitig den zentralen Mikroleiter (13a) und den Ausgangsmikroleiter (22) zu bilden.

## Claims

1. Reversible multichannel integrated optics switch comprising at least one buffer film (12), at least one recess (24, 24a, 82, 84, 122, 134, 144) made in the buffer film, at least one optical input microguide (18, 101-105, 136, 138a-138b) supported by the buffer film and orientated along a first direction (x) so as to carry an incident luminous beam (I) to be switched, at least two adjacent optical output microguides (20, 22, 74, 101'-105', 138a-138b, 146a-146d) roughly parallel to the first direction and supported by the buffer film so as to convey the switched luminous beam (C), the output and input microguides being disposed within their prolongation, at least one flexible girder (26, 26a, 26b, 86, 88, 94, 106, 130, 142a-142b) defined in the buffer film and equipped with one central optical microguide (32, 32a, 90, 98, 112, 132, 140a-140b) over its entire length and orientated along the first direction, the girder comprising one fixed extremity (28, 130a) and one free extremity (30, 94a, 106a) able to deform inside said recess along a second direction (y) perpendicular to the first direction, the central microguide being situated in the prolongation of the input microguide, excitation means (36-38-40, 44-46-48, 52-54-5, 52a, 91-92, 93-95, 124-126-128) to generate deformations of the girder along the second direction (y) so as to bring the free extremity of the central microguide into the prolongation of one of the output microguides and thus switch the incident beam, characterized in that the optical switch is an integrated optical switch, in that it also comprises a monocrystalline substrate (10), in that the buffer film (12) is supported by the substrate, in that the recess is also made in the substrate, in that the first and second directions are parallel to the substrate surface, in that the output and input microguides are positioned on either side of the recess, in that the fixed extremity of the flexible beam is integral with the substrate and in that tne switch comprises a return beam (118) defined in the buffer film and oriented in the second direction (y).

2. Optical switch according to claim 1, characterized in that it includes 1) at least two adjacent optical input microguides (101-105) roughly parallel to the first direction, 2) at least two optical output microguides (101'-105'), 3) one first and one second recess (82, 84), each being distinct from the other, made in the substrate and the buffer film and disposed with one being an extension of the other between the input and output microguides, 4) one first girder (86) and one second girder (88) integral via their fixed extremity and disposed with one being an extension of the other so that their central microguides (90) are in coincidence and orientated along the first direction (x), the free extremity (86a) of the first girder being able to deform in the first recess and the free extremity (88a) of the second girder being able to deform in the second recess, 5) first means (91-92) to generate deformations of the first girder so as to bring the free extremity of its central microguide into the prolongation of one of the input microguides (101-105), and 6) second means (93-95) to generate deformations of the second girder so as to bring the free extremity of its central microguide into the prolongation of one of the output microguides (101'-105').

3. Optical switch according to claim 1 or 2, characterized in that the free extremity (30) of the girder (26) supports a block (66) embodied in the buffer film and able to move into said recess along the second direction (y), this block comprising a central microguide (32) extending the central microguide of the girder and recesses (68, 70) on both sides of its central microguide.

4. Optical switch according to any one of claims 1 to 3, characterized in that the girder (26a, 94, 106) comprises outside the central microguide at least one recess (62, 64, 63, 96, 108, 110) intended to lighten the girder.

5. Optical switch according to claim 4, characterized in that the girder (26a, 106) comprises a recess (62-64, 108-110) on both sides of its central microguide.

6. Optical switch according to claims 1 to 5, characterized in that the return movement girder (118) is equipped with small girders (120) parallel to the first direction (x) and each provided with a metallization (126) defining, with the surfaces opposite the metallized (124) recesses (122), variable-capacity capacitors.

7. Optical switch according to claim 1 or 2, characterized in that it includes several girders (142a-142b) roughly parallel to the first direction and whose free extremity is able to deform inside said recess (144).

8. Optical switch according to any one of claims 1 to 7, characterized in that at least one stop (149, 151) is provided in said recess (134, 144) close to one of the output microguides.

9. Optical switch according to any one of claims 1 to 8, characterized in that the excitation means comprise at least one electrically conductive spire (52) disposed on the surface of the girder and at its periphery, means (54) to feed the spire with electric current and means (56) to create a magnetic field orientated perpendicular to the surface of the girder.

10. Optical switch according to any one of claims 1 to 8, characterized in that the excitation means comprise at least one variable-capacity capacitor (36-38, 44-46, 91-92, 93-95, 124-126), whose armatures are parallel to the first direction (x), one of the armatures (38, 44, 91, 95, 126) being mobile and integral with the girder and the other armature (36, 46, 92, 93, 124) being fixed and integral with the recess, and means to apply a potential difference between these armatures.

11. Optical switch according to claim 3, characterized in that the excitation means comprise at least one electrically conductive spire (52b) disposed on the surface of the block and at its periphery, means (54) to feed this spire with electric current, and means (56) to create a magnetic field perpendicular to the surface of the block.

12. Optical switch according to any one of the claims 1 to 11, characterized in that the buffer film and the microguides are completely coated with an upper film (16) having a refraction index smaller than that of the microguides.

13. Optical switch according to claim 12, characterized in that the substrate is a silicon substrate, the buffer film and the upper film are made of non-doped silica and the microguides are made of silica doped with dopers increasing its refraction index.

14. Optical switch according to any one of claims 1 to 13, characterized in that the distances separating the free extremity (30) of the girder from the input extremity (20a, 22a, 74a) of each output microguide are equal.

15. Optical switch according to claim 14, characterized in that these distances are less than 10 micrometers.

16. Optical switch according to any one of claims 2 to 15, characterized in that the output microguides are disposed fan-shaped widening from their input towards their output and wherein the input microguides are disposed fan-shaped widening from their output towards their input.

17. Optical switch according to any one of claims 2 to 16, characterized in that the minimum distance separating the input and output microguides respectively amounts to between 10 and 20 micrometers.

18. Reversible multichannel switching system with integrated optics, characterized in that it includes several optical switches (fig. 14) according to any one of claims 1 to 17 and disposed waterfall-fashion.

19. Method to embody an optical switch according to any one of claims 1 to 17, characterized in that it includes the following stages:

a) formation of at least one buffer film (12) on the substrate (10) and equipped with one central microguide (13a) over its entire length and orientated along the first direction (x), and at least one output microguide (22) roughly parallel to the central microguide (13a) and extending over only one portion of the buffer film,

b) embodiment of a mask (17) above the buffer film defining the shapes of the recess and the girders, including the return girder (118), this mask masking the major part of the central microguide (13a),

c) etching of the buffer film as far as the substrate so as to form the girders, then

d) partial isotropic etching of the substrate so as to free the bottom of the girders and form the recess, this etching being effected for a depth exceeding 1/2 where 1 represents the width of the flexible girder measured along the second direction (y) but smaller than the overall thickness of the substrate,

e) elimination of the mask, and

f) embodiment of the flexible girder excitation means.

20. Method according to claim 19, characterized in that the buffer film is etched anisotropically.

21. Method according to claim 19 or 20, characterized in that the stage a) consists of depositing the buffer film (12) on the substrate, depositing a guide film (13) on the buffer film having a refraction index exceeding that of the buffer film and of etching the guide film over its entire thickness so as to simultaneously form the central microguide (13a) and the output microguide (22).

FIG. 1

FIG. 4

FIG. 2

FIG. 3

FIG. 5

FIG. 6 A

FIG. 7

FIG. 6 B

56  56a  52a  56b

58

$\vec{B}$

32a

26b

60

FIG. 8 B

52a

52

32a

63

26b

## FIG. 8 A

## FIG. 9

21

FIG. 11

FIG. 12

FIG. 13

FIG. 10

FIG. 14

EP 0 451 018 B1